# FASCICULE DE BREVET EUROPEEN

(11) **EP 3 358 722 B1**
(45) Date de publication et mention de la délivrance du brevet: **30.06.2021**
(21) Numéro de dépôt: 18154452.9
(22) Date de dépôt: 31.01.2018
(51) Int. Cl.: H02K 5/24, H02K 9/06

(54) **MOTEUR AUTO-VENTILÉ SILENCIEUX, NOTAMMENT POUR UN VÉHICULE FERROVIAIRE**
LEISER SELBSTBELÜFTETER MOTOR, INSBESONDERE FÜR SCHIENENFAHRZEUG
A NOISELESS AUTO-VENTILATED MOTOR, IN PARTICULAR FOR A RAILWAY VEHICLE

(30) Priorité: 03.02.2017 FR 1750918
(43) Date de publication de la demande: 08.08.2018
(73) Titulaire: ALSTOM Transport Technologies, 93400 Saint-Ouen (FR)
(72) Inventeur: MAS, Thomas, 93500 PANTIN (FR)
(74) Mandataire: Lavoix

(56) Documents cités:
- CN-U- 204 481 621
- FR-A1- 2 728 028
- JP-A- S5 716 547
- JP-U- H0 179 359

## Description

La présente invention concerne un moteur auto-ventilé, notamment pour un véhicule ferroviaire.

Un moteur auto-ventilé comporte de manière classique un rotor et un stator, le rotor étant muni d'un arbre de sortie. Le moteur auto-ventilé comporte en outre une hélice de ventilation, montée sur l'arbre de sortie.

L'hélice étant liée en rotation à l'arbre de sortie, elle est automatiquement activée lorsque l'arbre de sortie est en rotation, faisant circuler un flux d'air à l'intérieur du moteur pour ainsi effectuer un refroidissement de ce moteur.

Un tel moteur auto-ventilé a toutefois pour inconvénient d'être particulièrement bruyant. En effet, le flux d'air généré par l'hélice de ventilation est une source de bruit importante.

Plus particulièrement, le bruit est généré par le flux d'air induit par l'hélice, puis se propage sur les surfaces avant et latérales du moteur, ainsi que vers l'arrière du moteur.

On connait déjà, d'après JP H01 79359, un moteur auto-ventilé similaire à celui du préambule de la revendication 1.

L'invention a notamment pour but de remédier à l'inconvénient précité, en proposant un moteur auto-ventilé relativement silencieux.

A cet effet, l'invention a notamment pour objet un moteur auto-ventilé selon la revendication 1.

Les trois organes de réduction de bruit agissent en synergie pour absorber de manière optimale les ondes sonores dues à la circulation du flux d'air dans le moteur.

Un moteur auto-ventilé selon l'invention peut comporter en outre l'une ou plusieurs des caractéristiques suivantes, prises seules ou selon toutes combinaisons techniquement envisageables.
- Le premier organe de réduction de bruit présente une forme générale bombée, et comprenant une première base comportant une première ouverture, et une seconde base comportant une seconde ouverture, la seconde ouverture étant agencée en regard de l'ouverture d'entrée d'air du carter.
- La première ouverture du premier organe de réduction de bruit s'étend sur une surface sensiblement égale à celle sur laquelle s'étend l'ouverture d'entrée d'air.
- Le premier organe de réduction de bruit délimite une cavité dans laquelle le second organe de réduction de bruit est au moins en partie logé.
- Le premier organe de réduction de bruit présente une paroi interne délimitant la cavité, la paroi interne comprenant un revêtement interne en matériaux absorbant acoustique, par exemple en fibres de polyester ou en mousse de mélamine.
- Le revêtement interne absorbant est recouvert d'une couche poreuse, par exemple formée par une feuille métallique micro perforée.
- Le second organe de réduction de bruit présente une forme générale galbée.
- Le second organe de réduction de bruit présente une face externe comprenant un revêtement absorbant acoustique, par exemple en fibres de polyester ou en mousse de mélamine, optionnellement recouvert par une couche poreuse, par exemple formée par une feuille métallique micro perforée.
- Le troisième organe de réduction de bruit présente une forme générale cylindrique, coaxiale à l'arbre et entourant le carter à l'ouverture de sortie d'air.
- Le troisième organe de réduction de bruit présente une surface interne comprenant un revêtement absorbant acoustique, par exemple en fibres de polyester ou en mousse de mélamine, de préférence recouvert par une couche poreuse, par exemple formée par une feuille métallique micro perforée.

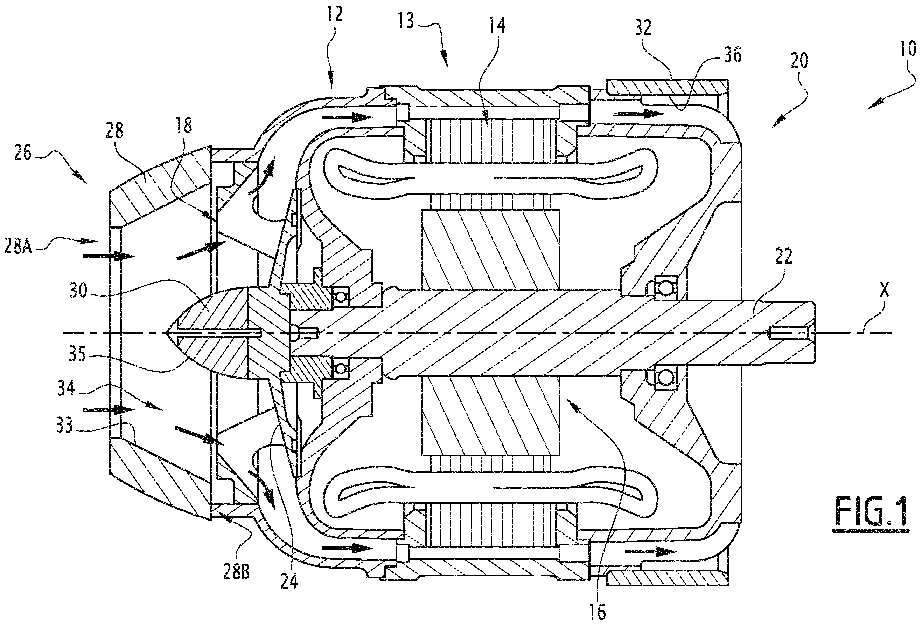

L'invention sera mieux comprise à la lecture de la description qui va suivre, donnée uniquement à titre d'exemple et faite en se référant à la figure unique annexée, représentant une vue en coupe axiale d'un moteur auto-ventilé selon un exemple de mode de réalisation de l'invention.

On a représenté sur la figure un moteur auto-ventilé 10 selon un exemple de mode de réalisation de l'invention.

Le moteur 10 est notamment destiné à équiper un véhicule ferroviaire.

Le moteur 10 comporte un carter 12, dans lequel sont logés des moyens de motorisation 13.

Les moyens de motorisation 13 comportent un stator 14 fixé au carter 12, et un rotor 16 mobile en rotation autour d'un axe de rotation X.

Le carter 12 présente une ouverture d'entrée d'air 18 et une ouverture de sortie d'air 20, alignés dans la direction de l'axe de rotation X. Ainsi, le carter 12 délimite un passage d'air entre l'ouverture d'entrée d'air 18 et l'ouverture de sortie d'air 20, le rotor 16 et le stator 14 étant au moins en partie logés dans ce passage d'air.

Les moyens de motorisation 13 comportent par ailleurs un arbre de sortie 22, s'étendant le long de l'axe de rotation X, et mobile en rotation autour de cet axe de rotation X. L'arbre de sortie 22 est lié en rotation au rotor 16.

Le moteur 10 est auto-ventilé. A cet effet, il comporte une hélice de ventilation 24, liée en rotation à l'arbre de sortie 22. Plus précisément, l'hélice de ventilation 24 est montée sur une extrémité de l'arbre de sortie 22, à proximité de l'ouverture d'entrée d'air 18. Ainsi, lorsque l'arbre de sortie 22 est en rotation, lors du fonctionnement normal du moteur, l'hélice de ventilation 24 est également en rotation. De l'air est alors aspiré à travers l'ouverture d'entrée d'air 18, et rejeté à travers l'ouverture de sortie 20, sous l'effet de la rotation de l'hélice de ventilation 24. L'air, en passant dans le passage d'air, refroidit alors le rotor 16 et le stator 14.

Afin de limiter le bruit dû à l'hélice de ventilation 24, et principalement dû au flux d'air généré par cette hélice de ventilation 24, le moteur 10 comporte un dispositif 26 de réduction de bruit.

Le dispositif de réduction de bruit 26 comporte un premier organe de réduction de bruit 28, un second organe de réduction de bruit 30 et un troisième organe de réduction de bruit 32, agissant en synergie pour limiter au maximum le bruit dû à la circulation du flux d'air dans le moteur 10.

Le premier organe de réduction de bruit 28 est agencé à l'ouverture d'entrée d'air 18, formant une jupe entourant cette ouverture d'entrée d'air 18.

Le premier organe de réduction de bruit 28 présente une forme générale de révolution autour de l'axe de rotation X.

Le premier organe de réduction de bruit 28 présente une forme générale bombée, et s'étendant dans la direction de l'axe de rotation X entre une première base 28A comportant une première ouverture, et une seconde base 28B comportant une seconde ouverture, la seconde ouverture étant agencée en regard de l'ouverture d'entrée d'air 18 du carter 12.

Avantageusement, la première base 28A s'étend sur une surface inférieure à la seconde base 28B. Ainsi, le premier organe de réduction de bruit 28 présente une forme générale tronconique à paroi bombée.

De même, la première ouverture s'étend sur une surface inférieure à la seconde ouverture. Toutefois, la première ouverture s'étend sensiblement sur une surface similaire à celle de l'ouverture d'entrée d'air 18, de sorte que la présence du premier organe de réduction de bruit 28 ne modifie pas, ou peu, la section d'entrée d'air dans le moteur 10. Ainsi, la seconde ouverture est plus grande que l'ouverture d'entrée d'air 18, comme cela est visible sur la figure.

Le premier organe de réduction de bruit 28 est creux, et comporte une paroi interne 33 délimitant une cavité 34.

La paroi interne 33 comporte un revêtement en matériau absorbant acoustique, c'est-à-dire propre à absorber des ondes sonores.

Par exemple, le revêtement est en fibres de polyester ou en mousse de mélamine. Tout autre matériau absorbant acoustique est toutefois envisageable.

Avantageusement, le revêtement est recouvert d'une couche poreuse, par exemple formée par une feuille métallique micro perforée.

Cette couche poreuse permet de maximiser la surface de friction entre le flux d'air et le revêtement absorbant, améliorant ainsi la réduction de bruit.

Le second organe de réduction de bruit 30 est au moins en partie logé dans la cavité 34. Ainsi, le second organe de réduction de bruit 30 est agencé en regard de la paroi interne 33.

Le premier organe de réduction de bruit 28 délimite donc un canal d'entrée d'air avec le second organe de réduction de bruit 30. L'air pénètre dans le moteur au travers de ce canal d'entrée d'air.

Les dimensions de ce canal d'entrée d'air peuvent être ajustées en modifiant les dimensions du second organe de réduction de bruit 30 (diamètre, longueur le long de l'axe X...), ou du premier organe de réduction de bruit 28 (longueur le long de l'axe X, angle de convergence...). Ces dimensions sont choisies pour trouver le meilleur compromis entre la réduction de bruit souhaitée et l'encombrement souhaité pour le moteur 10.

Le second organe de réduction de bruit 30 présente une forme générale galbée, de révolution autour de l'axe de rotation X.

Le second organe de réduction de bruit 30 présente une face externe 35 comprenant de préférence un revêtement absorbant acoustique, de manière optionnelle recouvert d'une couche poreuse. Une telle couche poreuse permet de maximiser la surface de friction entre le flux d'air et le revêtement absorbant.

Comme précédemment, le revêtement absorbant est par exemple en fibres de polyester ou en mousse de mélamine, ou tout autre matériau absorbant acoustique envisageable. La couche poreuse est par exemple formée par une feuille métallique micro perforée.

Le troisième organe de réduction de bruit 32 est fixé au carter 12, et agencé à l'ouverture de sortie d'air 20, formant une jupe entourant cette ouverture de sortie d'air 20.

Le troisième organe de réduction de bruit 32 présente avantageusement une forme générale de révolution autour de l'axe de rotation X. Plus particulièrement, le troisième organe de réduction de bruit 32 présente avantageusement une forme générale cylindrique définie autour de l'axe de rotation X. Une telle forme cylindrique permet de diminuer le bruit, sans conséquence significative sur le flux d'air sortant.

Le troisième organe de réduction de bruit 32 délimite un canal de sortie d'air avec le carter 12, autour de l'ouverture de sortie d'air 20.

Le troisième organe de réduction de bruit 32 présente également une surface interne 36 comprenant de préférence un revêtement absorbant acoustique, avantageusement recouvert d'une couche poreuse.

Le revêtement absorbant est par exemple en fibres de polyester ou en mousse de mélamine, ou tout autre matériau absorbant acoustique envisageable, et la couche poreuse est par exemple formée par une feuille métallique micro perforée.

Comme précédemment, la couche poreuse permet de maximiser la surface de friction entre le flux d'air et le revêtement absorbant.

Le fonctionnement du dispositif de réduction de bruit 26 va maintenant être décrit.

Le flux d'air, aspiré par l'hélice de ventilation 24, est aspiré dans le moteur à travers le canal d'entrée d'air défini entre le premier organe de réduction de bruit 28 et le second organe de réduction de bruit 30.

L'énergie acoustique générée par le flux d'air et le mouvement de l'hélice de ventilation 24 se propage vers ce canal d'entrée d'air, et y est absorbée par les matériaux absorbants recouvrant la paroi interne 33 du premier organe de réduction de bruit 28 et la face externe 35 du second organe de réduction de bruit 30.

L'énergie acoustique qui s'est propagée à travers le moteur vers la sortie d'air 20 se dirige également vers le canal de sortie d'air, et y est absorbée par les matériaux absorbants recouvrant la surface interne 36 du troisième organe de réduction de bruit 32.

On notera que l'invention n'est pas limitée au mode de réalisation précédemment décrit, mais pourrait présenter diverses variantes complémentaires, sans sortir du cadre de l'invention qui est définie dans les revendications annexées.

## Revendications

1. Moteur auto-ventilé (10), notamment pour véhicule ferroviaire, comportant :
- un carter (12), présentant une ouverture d'entrée d'air (18) et une ouverture de sortie d'air (20), et délimitant un passage d'air entre les ouvertures d'entrée (18) et de sortie (20) d'air,
- des moyens de motorisation (13) comprenant un arbre (22), logés dans le carter (12),
- une hélice de ventilation (24), liée en rotation à l'arbre (22), logée dans le passage d'air, et
- un dispositif (26) de réduction de bruit, comprenant un premier organe de réduction de bruit (28), fixé au carter (12) à l'ouverture d'entrée d'air (18), un second organe de réduction de bruit (30) et un troisième organe de réduction de bruit (32), fixé au carter (12) à l'ouverture de sortie d'air (20),
**caractérisé en ce que** :
- le second organe de réduction de bruit (30) est agencé sur l'hélice de ventilation (24)
- le premier organe de réduction de bruit (28) présente une paroi interne (33) délimitant une cavité (34) dans laquelle le second organe de réduction de bruit (30) est au moins en partie logé, la paroi interne (33) présentant une forme générale tronconique s'étendant entre une première ouverture et une seconde ouverture,
- la première ouverture s'étend sur une surface inférieure à la seconde ouverture, et la première ouverture s'étend sensiblement sur une surface similaire à celle de l'ouverture d'entrée d'air (18).

2. Moteur auto-ventilé (10) selon la revendication 1, dans lequel le premier organe de réduction de bruit (28) présente une forme générale bombée, et comprenant une première base (28A) comportant la première ouverture, et une seconde base (28B) comportant la seconde ouverture, la seconde ouverture étant agencée en regard de l'ouverture d'entrée d'air (18) du carter (12).

3. Moteur auto-ventilé (10) selon la revendication 2, dans lequel la première ouverture du premier organe de réduction de bruit (28) s'étend sur une surface sensiblement égale à celle sur laquelle s'étend l'ouverture d'entrée d'air (18).

4. Moteur auto-ventilé (10) selon l'une quelconque des revendications précédentes, dans lequel la paroi interne (33) comprend un revêtement interne en matériau absorbant acoustique, par exemple en fibres de polyester ou en mousse de mélamine.

5. Moteur auto-ventilé (10) selon la revendication 4, dans lequel le revêtement interne absorbant est recouvert d'une couche poreuse, par exemple formée par une feuille métallique micro perforée.

6. Moteur auto-ventilé (10) selon l'une quelconque des revendications précédentes, dans lequel le second organe de réduction de bruit (30) présente une forme générale galbée.

7. Moteur auto-ventilé (10) selon la revendication 6, dans lequel le second organe de réduction de bruit (30) présente une face externe (35) comprenant un revêtement absorbant acoustique, par exemple en fibres de polyester ou en mousse de mélamine, optionnellement recouvert par une couche poreuse, par exemple formée par une feuille métallique micro perforée.

8. Moteur auto-ventilé (10) selon l'une quelconque des revendications précédentes, dans lequel le troisième organe de réduction de bruit (32) présente une forme générale cylindrique, coaxiale à l'arbre (22) et entourant le carter (12) à l'ouverture de sortie d'air (20).

9. Moteur auto-ventilé selon la revendication 8, dans lequel le troisième organe de réduction de bruit (32) présente une surface interne (36) comprenant un revêtement absorbant acoustique, par exemple en fibres de polyester ou en mousse de mélamine, de préférence recouvert par une couche poreuse, par exemple formée par une feuille métallique micro perforée.

## Patentansprüche

1. Selbstbelüfteter Motor (10), insbesondere für ein Schienenfahrzeug, aufweisend:
- ein Gehäuse (12), das eine Lufteingangsöffnung (18) und eine Luftausgangsöffnung (20) hat und eine Luftpassage zwischen der Lufteingangs- (18) und der Luftausgangsöffnung (20) definiert,
- Antriebsmittel (13) mit einer Welle (22), die in dem Gehäuse (12) untergebracht sind,
- ein Lüftungspropeller (24), der mit der Welle (22) drehfest verbunden ist und in der Luftpassage untergebracht ist, und
- eine Vorrichtung (26) zur Lärmreduzierung, mit einem ersten Lärmreduzierorgan (28), das an der Lufteingangsöffnung (18) am Gehäuse (12) fixiert ist, einem zweiten Lärmreduzierorgan (30) und einem dritten Lärmreduzierorgan (32), das an der Luftausgangsöffnung (20) am Gehäuse (12) fixiert ist,
**dadurch gekennzeichnet, dass**:
- das zweite Lärmreduzierorgan (30) an dem Lüftungspropeller (24) angeordnet ist,
- das erste Lärmreduzierorgan (28) eine Innenwand (33) hat, die eine Kavität (34) begrenzt, in welcher das zweite Lärmreduzierorgan (30) zumindest teilweise untergebracht ist, wobei die Innenwand (33) eine im Allgemeinen kegelstumpfartige Form hat, sich erstreckend zwischen einer ersten Öffnung und einer zweiten Öffnung,
- die erste Öffnung sich über eine Fläche erstreckt, die kleiner ist als die zweite Öffnung, und sich die erste Öffnung im Wesentlichen über eine Fläche erstreckt, die ähnlich ist zu jener der Lufteingangsöffnung (18).

2. Selbstbelüfteter Motor (10) gemäß Anspruch 1, wobei das erste Lärmreduzierorgan (28) eine im Allgemeinen gewölbte Form hat und aufweist eine erste Basis (28A), die die erste Öffnung hat, und eine zweite Basis (28B), die die zweite Öffnung hat, wobei die zweite Öffnung gegenüber der Lufteingangsöffnung (18) des Gehäuses (12) angeordnet ist.

3. Selbstbelüfteter Motor (10) gemäß Anspruch 2, wobei die erste Öffnung des ersten Lärmreduzierorgans (28) sich über eine Fläche erstreckt, die im Wesentlichen gleich zu jener ist, über welche sich die Lufteingangsöffnung (18) erstreckt.

4. Selbstbelüfteter Motor (10) gemäß irgendeinem der vorhergehenden Ansprüche, wobei die Innenwand (33) eine innere Beschichtung aus einem schallabsorbierenden Material, zum Beispiel aus Polyesterfasern oder aus Melaminschaum, aufweist.

5. Selbstbelüfteter Motor (10) gemäß Anspruch 4, wobei die absorbierende, innere Beschichtung von einer porösen Schicht bedeckt ist, die zum Beispiel von einem mikroperforierten Metallblech gebildet ist.

6. Selbstbelüfteter Motor (10) gemäß irgendeinem der vorhergehenden Ansprüche, wobei das zweite Lärmreduzierorgan (30) eine im Allgemeinen bauchige Form hat.

7. Selbstbelüfteter Motor (10) gemäß Anspruch 6, wobei das zweite Lärmreduzierorgan (30) eine Außenseite (35) hat, die eine schallabsorbierende Beschichtung aufweist, zum Beispiel aus Polyesterfasern oder aus Melaminschaum, die optional bedeckt ist von einer porösen Schicht, die zum Beispiel von einem mikroperforierten Metallblech gebildet ist.

8. Selbstbelüfteter Motor (10) gemäß irgendeinem der vorhergehenden Ansprüche, wobei das dritte Lärmreduzierorgan (32) eine zylindrische Allgemeinform hat, koaxial zur Welle (22) ist und das Gehäuse (12) an der Luftausgangsöffnung (20) umgibt.

9. Selbstbelüfteter Motor gemäß Anspruch 8, wobei das dritte Lärmreduzierorgan (32) eine innere Fläche (36) hat, die eine schallabsorbierende Beschichtung, zum Beispiel aus Polyesterfasern oder aus Melaminschaum, aufweist, die bevorzugt bedeckt ist von einer porösen Schicht, die zum Beispiel von einem mikroperforierten Metallblech gebildet ist.

## Claims

1. Self-ventilated motor (10), in particular for a railway vehicle, comprising:
- a casing (12), having an air inlet opening (18) and an air outlet opening (20), and delimiting an air passage between the air inlet opening (18) and the air outlet opening (20),
- drive means (13) comprising a shaft (22) housed in the casing (12),
- a ventilation propeller (24) housed in the air passage and connected to the shaft (22) upon rotation, and
- a device (26) for reducing noise, comprising a first noise reduction member (28) fixed to the casing (12) at the air inlet opening (18), a second noise reduction member (30) and a third noise reduction member (32) fixed to the casing (12) at the air outlet opening (20)
**characterized in that**:
- the second noise reduction member (30) is arranged on the ventilation propeller (24),
- the first noise reduction member (28) has an inner wall (33) delimiting a cavity (34) in which the second noise reduction member (30) is at least partially housed, the inner wall (33) having a general frustoconical shape extending between a first opening an a second opening,
- the first opening extends over a surface inferior to the second opening, and the first opening extends substantially over a surface similar to the surface of the air inlet opening (18).

2. Self-ventilated motor (10) according to claim 1, wherein the first noise reduction member (28) has a substantially curved shape, and comprises a first base (28A) having the first opening and a second base (28B) having the second opening, the second opening being arranged to face the air inlet opening (18) of the casing (12).

3. Self-ventilated motor (10) according to claim 2, wherein the first opening of the first noise reduction member (28) extends over a surface substantially equal to that over which the air inlet opening (18) extends.

4. Self-ventilated motor (10) according to any one of the preceding claims, wherein the inner wall (33) comprises an inner lining of noise absorbing material, for example of polyester fibers or melamine foam.

5. Self-ventilated motor (10) according to claim 4, wherein the absorbent inner lining is covered with a porous layer, for example in the form of a micro-perforated metal sheet.

6. Self-ventilated motor (10) according to any one of the preceding claims, wherein the second noise reduction member (30) has a substantially curved shape.

7. Self-ventilated motor (10) according to claim 6, wherein the second noise reduction member (30) has an outer face (35) comprising a noise absorbing lining, for example made of polyester fiber or melamine foam, and optionally covered by a porous layer, for example in the form of a micro-perforated metal sheet.

8. Self-ventilated motor (10) according to any one of the preceding claims, wherein the third noise reduction member (32) has a generally cylindrical shape that is coaxial with the shaft (22) and surrounds the casing (12) at the air outlet opening (20).

9. Self-ventilated motor according to claim 8, wherein the third noise reduction member (32) has an inner surface (36) comprising a noise absorbing lining, for example made of polyester fiber or melamine foam, preferably covered by a porous layer, for example formed by a micro-perforated metal sheet.
